# EUROPEAN PATENT SPECIFICATION

(11) **EP 2 918 198 B1**
(45) Date of publication and mention of the grant of the patent: **08.01.2020**
(21) Application number: 13852909.4
(22) Date of filing: 04.11.2013
(51) Int. Cl.: A47J 31/44, A47J 31/36, B65D 85/804

(54) **COFFEE CAPSULE MOUNTING AND REMOVAL STRUCTURE**
STRUKTUR ZUR MONTAGE UND ENTFERNUNG VON KAFFEEKAPSELN
STRUCTURE DE SUPPORT ET DE RETRAIT DE CAPSULE DE CAFÉ

(30) Priority: 09.11.2012 KR 20120126732
(43) Date of publication of application: 16.09.2015
(73) Proprietor: Coway Co., Ltd., Gongju-si, Chungcheongnam-do 314-895 (KR)
(72) Inventor: LEE, Soo-Yeun, Seoul 151-851 (KR); OH, Dong-Min, Seoul 151-851 (KR); JUNG, Hee-Do, Seoul 151-851 (KR); CHOI, Hwan-Seok, Seoul 151-851 (KR); KANG, Dae-Sik, Seoul 151-851 (KR); CHOI, Jin-Woo, Seoul 151-851 (KR)
(74) Representative: Nederlandsch Octrooibureau
(86) International application number: PCT/KR2013/009875
(87) International publication number: WO 2014/073822

(56) References cited:
- EP-A1- 2 283 755
- WO-A1-2007/016977
- WO-A1-2012/046195
- KR-A- 20070 110 020
- KR-A- 20090 051 258
- KR-A- 20100 099 210
- KR-U- 20110 010 665
- US-A1- 2012 199 011

## Description

### [Technical Field]

The present disclosure relates to a coffee capsule mounting and removal structure provided in a coffee extracting apparatus configured to extract liquid coffee from a coffee capsule with coffee grounds sealed therein and enabling a coffee capsule to be mounted in or removed from the coffee extracting apparatus, and more particularly, to a coffee capsule mounting and removal structure in which an upper portion of a receiving portion formed in a capsule housing is configured to be opened and closed by a housing cover such that a coffee capsule can be received therein using a lever member and a plurality of link members.

### [Background Art]

A coffee capsule includes coffee grounds contained therein in a sealed manner. When hot water in a sealed state is supplied to the coffee capsule from the outside, liquid coffee is generated in the coffee capsule. The liquid coffee generated in the coffee capsule is discharged outwardly therefrom to be supplied to a user.

A coffee extracting apparatus is configured such that, when a coffee capsule is mounted therein, hot water in a sealed state is supplied to the coffee capsule to provide liquid coffee to a user. The coffee extraction-completed coffee capsule is removed from the coffee extracting apparatus.

Recently, a coffee extracting apparatus has been integrated with a water purifier to supply hot purified water filtered and heated by one or more purifying filters included in the water purifier, to a coffee capsule, thereby extracting liquid coffee from a coffee capsule, and in addition, a coffee extracting apparatus is applied to various devices.

A coffee extracting apparatus includes a coffee capsule mounting and removing structure allowing a coffee capsule to be mounted in or removed from the coffee extracting apparatus. Capsule mounting and removing structures of such coffee machines are disclosed in WO2012/046195, EP2283755 and WO2007/016977.

In a related art coffee capsule mounting and removing structure, a configuration for mounting and removing a coffee capsule is provided in a receiving portion, a receiving space with an open upper portion, in which a coffee capsule is received. Thus, since the space including the configuration for mounting a coffee capsule in or removing a coffee capsule from the receiving portion is required, the receiving portion may not be properly sealed.

Since the receiving portion may not be properly sealed, liquid coffee generated in the coffee capsule may be discharged outwardly through the space in which the configuration for mounting and removing the coffee capsule is provided within the receiving portion.

For example, in a case in which hot water at high pressure is supplied to the coffee capsule to make coffee taste better, the high pressure acts on the receiving portion and liquid coffee generated in the coffee capsule is discharged outwardly through the space in which the configuration for mounting and removing the coffee capsule is provided within the receiving portion.

Also, liquid coffee, or the like, may remain in the space in which the configuration for mounting and removing the coffee capsule is provided, contaminating the receiving portion and degrading a hygienic condition thereof.

### [Disclosure]

### [Technical Problem]

The present invention has been devised through recognition of any one of the issues or problems evident in the related art.

An aspect of the present disclosure is to properly seal a receiving portion in which a coffee capsule is received.

Another aspect of the present disclosure is to prevent a receiving portion in which a coffee capsule is received from being contaminated by residual liquid coffee, or the like, to thus enhance a hygienic condition thereof.

Another aspect of the present disclosure is to easily mount or remove a coffee capsule by using a lever member and a plurality of link members.

### [Technical Solution]

According to an aspect of the present disclosure, a coffee capsule mounting and removal structure may include the following features.

The present disclosure is based on a configuration in which an upper portion of a receiving portion formed in a capsule housing is opened and closed by a housing cover such that a coffee capsule can be received therein using a lever member and a plurality of link members.

According to the invention, the coffee capsule mounting and removal structure includes: a capsule housing including a receiving portion allowing a coffee capsule with coffee grounds contained therein in a sealed manner to be received therein, and configured to allow liquid coffee generated in the coffee capsule to be discharged to the outside; a housing cover hingedly coupled to the capsule housing and covering an open upper portion of the receiving portion; and a driving unit including a lever member and a plurality of link members, configured to allow the housing cover to be rotated by the action of the link members according to an operation of the lever member, so as to open and close the upper portion of the receiving portion.

According to the invention, the driving unit is configured such that the housing cover is not opened even in the case that high pressure is exerted on the receiving portion in a state in which the upper portion of the receiving portion is closed by the housing cover.

According to the invention, the driving unit includes: a lever member hingedly coupled to an upper portion of the capsule housing; a rotary link member having one side hingedly coupled to a lower portion of the capsule housing; a first connection link member having one side hingedly coupled to the housing cover and the other side hingedly coupled to the other side of the rotary link member; and a second connection link member having one side hingedly coupled to the lever member and the other side hingedly coupled to the other side of the rotary link member.

The rotary link member may be shorter than the first and second connection link members.

A first central virtual line extending from one side of the rotary link member to the other side thereof may be positioned between a second central virtual line extending from one side of the first connection link member to the other side thereof and a third central virtual line extending from one side of the second connection link member to the other side thereof.

The third central virtual line may be positioned to be closer to a hinge connection portion of the lever member than the second central virtual line.

A recess may be provided in the first connection link member such that the recess is caught by a protrusion provided in the capsule housing when the housing cover closes the upper portion of the receiving portion.

A hot water supply member may be provided in the housing cover to punch an upper portion of a coffee capsule received in the receiving portion and supply hot water when the upper portion of the receiving portion is closed.

A first sealing member may be provided in the housing cover to perform sealing between the capsule housing and housing cover when the upper portion of the receiving portion is closed.

A coffee outlet connected to the receiving portion may be provided in the capsule housing, and a coffee supply member may be provided in the receiving portion, may punch a lower portion of a coffee capsule received in the receiving unit to allow liquid coffee generated in the coffee capsule to flow to the coffee outlet, and may be connected to the coffee outlet.

One or more grip recesses may be formed on the circumference of the receiving portion of the capsule housing to allow the coffee capsule to be easily removed from the receiving portion.

A second sealing member may be provided on the circumference of the receiving portion of the capsule housing.

A pressing protrusion pressing the second sealing member may be provided in the housing cover in a position corresponding to the second sealing member.

### [Advantageous Effects]

According to an exemplary embodiment of the present disclosure, the upper portion of the receiving portion formed in the capsule housing may be opened and closed by the housing cover such that a coffee capsule is received therein using a lever member and a plurality of link members.

Also, according to an exemplary embodiment of the present disclosure, a user may easily mount a coffee capsule into the receiving portion of the capsule housing or remove a coffee capsule therefrom, directly.

Also, according to an exemplary embodiment of the present disclosure, since a configuration for mounting and removing a coffee capsule is not provided in the receiving portion in which a coffee capsule is received, the receiving portion may be properly sealed.

Also, according to an exemplary embodiment of the present disclosure, since liquid coffee, or the like, does not remain in the receiving portion in which a coffee capsule is received, the receiving portion may not be contaminated and a hygienic condition may be enhanced.

### [Description of Drawings]

FIG. 1 is a view illustrating a perspective view illustrating a coffee capsule mounting and removal structure according to an exemplary embodiment of the present disclosure.
FIG. 2 is an exploded perspective view illustrating the coffee capsule mounting and removal structure according to an exemplary embodiment of the present disclosure.
FIG. 3 is a cross-sectional view taken along line A-A' of FIG. 1.
FIG. 4 is a cross-sectional view illustrating a state in which a receiving portion of a capsule housing is closed by a housing cover in FIG. 3.
FIGS. 5 and 6 are cross-sectional views illustrating operations of the coffee capsule mounting and removal structure according to an exemplary embodiment of the present disclosure.

### [Mode for Invention]

In order to help provide an understanding of the foregoing features of the present disclosure, a coffee capsule mounting and removal structure according to an exemplary embodiment of the present disclosure will be described in detail hereinafter.

Hereinafter, embodiments most appropriate to help in an understanding of the technical features of the present invention will be described, the technical features of the present invention are not limited by the described embodiments and merely illustrate the implementation of the present invention through the embodiments described hereinafter. Thus, the present invention can be variably modified within the scope of the present invention through the embodiments described below, and such modifications are within the scope of the present invention. In order to help understand the embodiments described hereinafter, identical or similar reference numerals are used for relevant components among the components having the same function in the respective embodiments in the accompanying drawings.

Exemplary embodiments of the present disclosure are based on a configuration in which an upper portion of a receiving portion formed in a capsule housing is opened and closed by a housing cover such that a coffee capsule is received therein using a lever member and a plurality of link members.

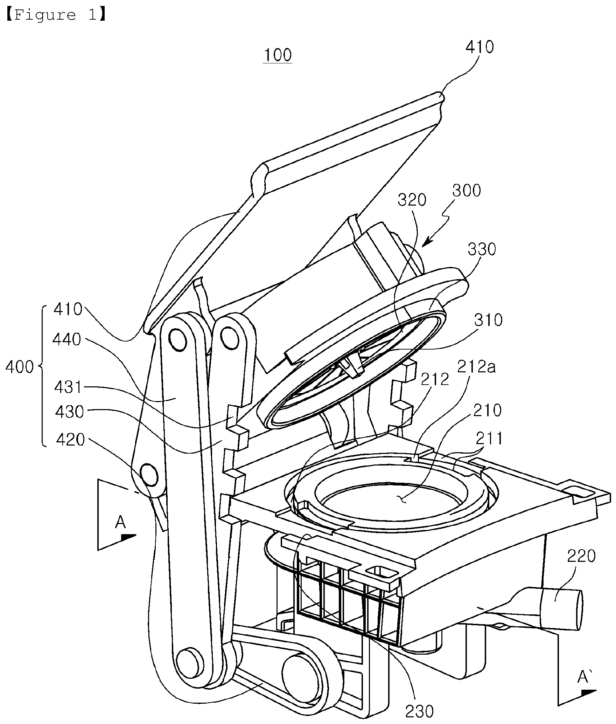

As illustrated in an exemplary embodiment illustrated in FIGS. 1 through 4, a coffee capsule mounting and removal structure 100 may include a capsule housing 200, a housing cover 300, and a driving unit 400.

As illustrated in the exemplary embodiment illustrated in FIGS. 1 through 4, a receiving portion 210 may be formed in the capsule housing 200. The receiving portion 210 may be a receiving space in which an upper portion thereof is open as in the illustrated exemplary embodiment. Thus, as illustrated, when a coffee capsule CA with coffee grounds sealed therein may be insertedly received by the receiving portion 210 through the open upper portion of the receiving portion 210.

Also, the capsule housing 200 may be configured such that liquid coffee generated in the coffee capsule CA is discharged outwardly. To this end, as in the exemplary embodiment illustrated in FIGS. 1 through 4, a coffee outlet 220 connected to the receiving portion 210 may be provided in the capsule housing 200.

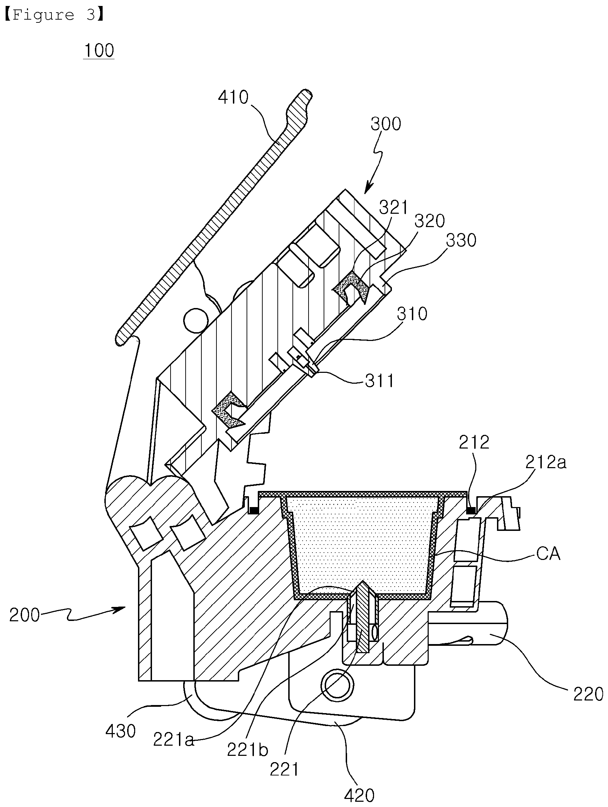

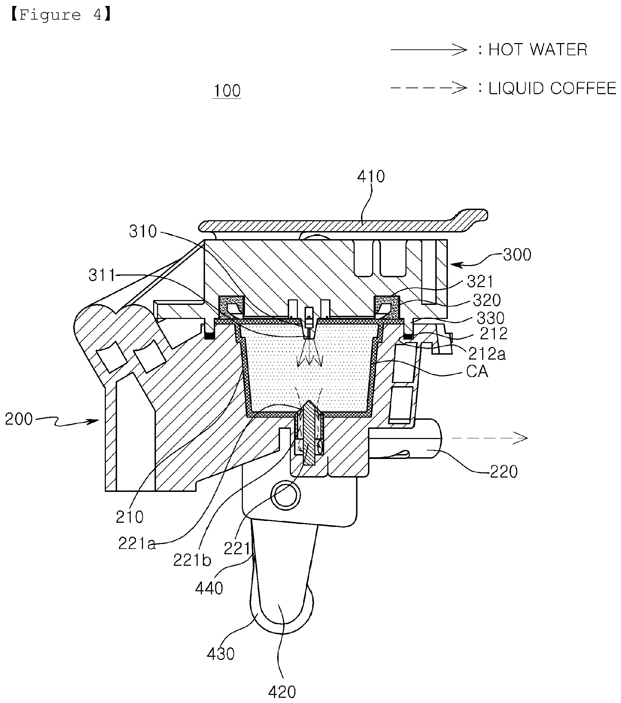

Also, as in the exemplary embodiment illustrated in FIGS. 3 and 4, a coffee supply member 221 may be provided in the receiving portion 210. An upper portion of the coffee supply member 221 may be pointed as illustrated. Thus, as illustrated in FIGS. 3 and 4, when the coffee capsule CA is received in the receiving portion 210, a lower portion of the coffee capsule CA may be punched by the coffee supply member 221.

Also, a flow hole 221a is formed in the upper portion of the coffee supply member 221, and a coffee flow channel 221b may be formed in the coffee supply member 221 and connected to the flow hole 221a. The coffee supply member 221 may be connected to the coffee outlet 220.

Through such a configuration, as described hereinafter and as illustrated in FIG. 4, when holt water is supplied to the coffee capsule CA by a hot water supply member 310 provided in the housing cover 300, liquid coffee generated in the coffee capsule CA may flow to the coffee flow channel 221b through the flow hole 221a of the coffee supply member 221. The liquid coffee may flow in the coffee flow channel 221b and pass outwardly through the coffee outlet 220.

As in the exemplary embodiment illustrated in FIGS. 1 through 4, one or more grip recesses 211 may be provided on the circumference of the receiving portion 210 of the capsule housing 200. As in the illustrated exemplary embodiment, two grip recesses 211 may be formed on the circumference of the receiving portion 210 of the capsule housing 200 in a facing manner. As illustrated in FIGS 1, 3, and 6, by virtue of the grip recesses 211, when the upper portion of the receiving portion 210 of the capsule housing 200 is opened, a user may easily grasp the coffee capsule CA. Also, the user may easily mount the coffee capsule CA into the receiving portion 210 of the capsule housing 200 or remove the coffee capsule CA therefrom, directly.

Also, as in the exemplary embodiment illustrated in FIGS. 1 through 4, a second sealing member 212 may be provided on the circumference of the receiving portion 210 of the capsule housing 200. The second sealing member 212 may be insertedly provided in a second sealing member recess 212a formed on the circumference of the receiving portion 210 of the capsule housing 200. Thus, even though the grip recesses 211 are provided in the capsule housing 200, sealing is made between the capsule housing 200 and the housing cover 300.

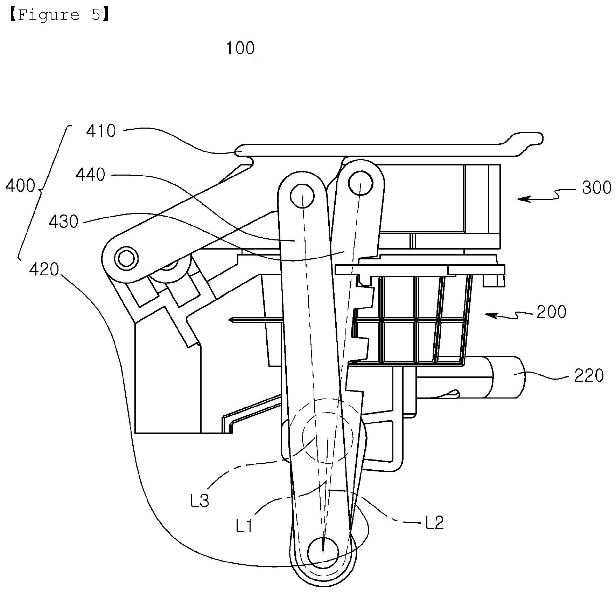

Also, as in the exemplary embodiment illustrated in FIGS. 1 through 4, a pressing protrusion 330 may be provided in a position of the housing cover 300 corresponding to the second sealing member 212. Accordingly, as illustrated in FIGS. 4 and 5, when the housing cover 300 closes the upper portion of the receiving portion 210, the pressing protrusion 330 of the housing cover 300 may press the second sealing member 212 of the capsule housing 200. Thus, sealing between the capsule housing 200 and the housing cover 300 may be firmly made by the second sealing member 212.

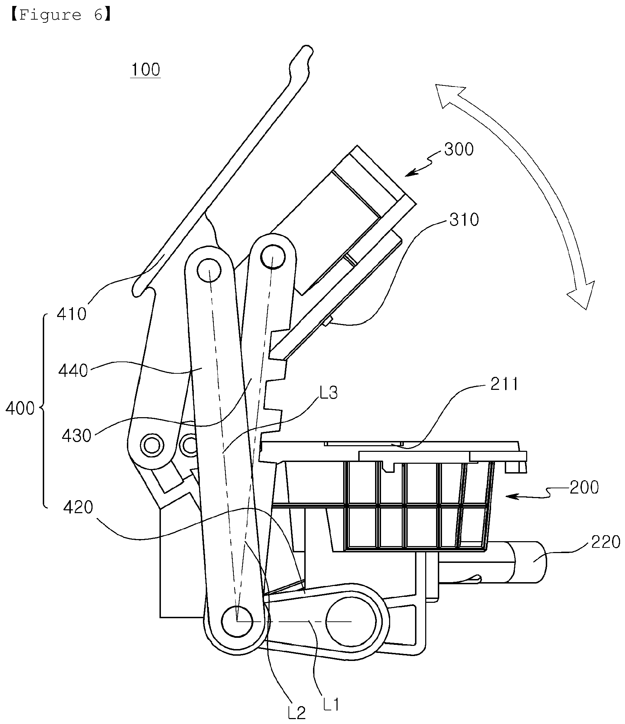

As in the exemplary embodiment illustrated in FIGS. 1, 3, and 4, the housing cover 300 may be hingedly coupled to the capsule housing 200. Accordingly, as illustrated in FIGS. 5 and 6, the housing cover 300 may rotate around a housing cover 300 hinge connection portion of the capsule housing 200.

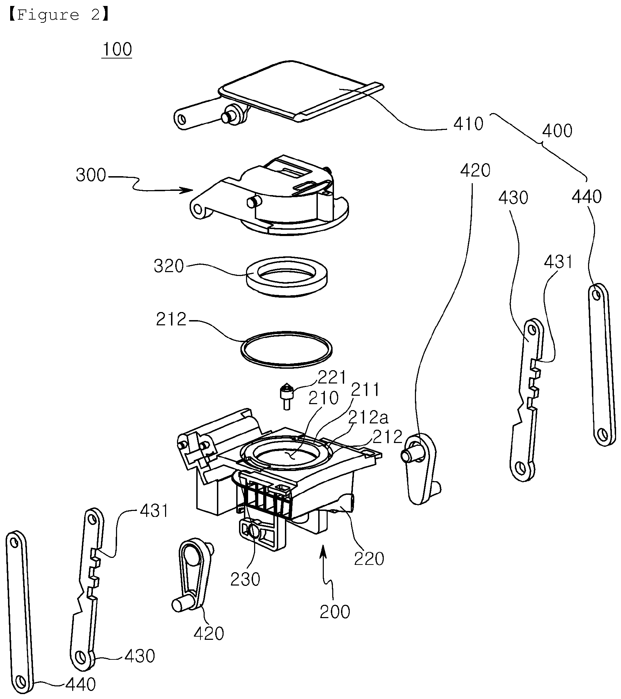

As in the exemplary embodiment illustrated in FIGS. 1 and 2, a hinge connection protrusion for the housing cover 300 may be provided in an upper portion of the capsule housing 200, and a hinge connection hole allowing the hinge connection protrusion for the housing cover 300 of the capsule housing 200 to be inserted thereinto may be provided in the housing cover 300, whereby the housing cover 300 may be hingedly coupled to the upper portion of the capsule housing 200.

However, the configuration in which the housing cover 300 is hingedly coupled to the upper portion of the capsule housing 200 is not limited to the illustrated exemplary embodiment and any known configuration may be employed as long as the housing cover 300 is hingedly coupled to the capsule housing 200.

Also, as illustrated in FIGS. 4 and 5, the housing cover 300 may be configured to cover the open upper portion of the receiving portion 210.

As in the exemplary embodiment illustrated in FIGS. 1, 3 and 4, the hot water supply member 310 may be provided in the housing cover 300. The hot water supply member 310 may be connected to a hot water source (not shown) by a connection pipe (not shown).

As in the exemplary embodiment illustrated in FIGS. 1, 3, and 4, the hot water supply member 310 may be pointed. Thus, as illustrated in FIGS. 4 and 5, when the housing cover 300 covers the upper portion of the receiving portion 210, an upper portion of a capsule coffee CA received in the receiving unit 210 of the capsule housing 200 may be punched.

Also, as in the exemplary embodiment illustrated in FIGS. 1 through 4, the hot water supply member 310 may include a hot water supply hole 311 and a hot water flow channel (not shown) connected to the hot water supply hole 311 and a hot water source. Accordingly, hot water from the hot water source may flow through the hot water flow channel so as to be supplied to the coffee capsule CA through the hot water supply hole 311. Accordingly, liquid coffee may be generated in the coffee capsule CA.

In order to make liquid coffee generated in the coffee capsule CA taste better, high pressure hot water may be supplied to the coffee capsule CA through the hot water supply member 310.

As in the exemplary embodiment illustrated in FIGS. 1, 3, and 4, a first sealing member 320 may be provided in the housing cover 300. The first sealing member 320 may have a first sealing member recess 321 formed in the housing cover 300 as in the illustrated exemplary embodiment. When the housing cover 300 closes the open upper portion of the receiving portion 210 of the capsule housing 200 as illustrated in FIGS. 4 and 5, sealing may be primarily made between the capsule housing 200 and the housing cover 300 by the first sealing member 320.

Also, when the housing cover 300 closes the upper portion of the receiving portion 210 as illustrated in FIGS. 4 and 5, sealing may be made secondarily between the capsule housing 200 and the housing cover 300 by the second sealing member 212 provided in the capsule housing 200. Accordingly, sealing may be firmly made between the capsule housing 200 and the housing cover 300.

As in the exemplary embodiment illustrated in FIGS. 1 through 4, the driving unit 400 may include a lever member 410 and a plurality of link members 420, 430, and 440. Also, as illustrated in FIGS. 5 and 6, the housing cover 300 may be configured to be rotated by operations of the link members 420, 430, and 440 according to an operation of the lever member 410. Accordingly, the upper portion of the receiving portion 210 of the capsule housing 200 may be opened and closed as illustrated in FIGS. 5 and 6. Also, the user may easily mount the coffee capsule CA in the receiving portion 210 or remove the coffee capsule CA therefrom directly.

In this manner, since the user may directly mount the coffee capsule CA in the receiving portion 210 or may remove the coffee capsule CA from the receiving portion 210, there is no need to provide a configuration for mounting and removing the coffee capsule CA in the receiving portion 210. Thus, a space for the configuration for mounting and removing the coffee capsule CA is not required in the receiving portion 210, and thus, the receiving portion may be properly sealed. Thus, since liquid coffee does not remain in the receiving portion 210, the receiving portion 210 may not be contaminated, enhancing a hygienic condition.

The driving unit 400 may be configured such that the housing cover 300 will not be opened even though high pressure is exerted on the receiving portion 210, for example, even though high pressure hot water is supplied to the coffee capsule CA so high pressure acts on the receiving portion 210 in a state in which the upper portion of the receiving portion 210 of the capsule housing 200 is closed by the housing cover 300 as illustrated in FIGS. 4 and 5.

To this end, as illustrated in FIGS. 1 through 4, the driving unit 400 may include the lever member 410, a rotary link member 420, a first connection link member 430, and a second connection link member 440.

As in the exemplary embodiment illustrated in FIGS. 1, 5, and 6, the lever member 410 may be hingedly coupled to an upper portion of the capsule housing 200. Accordingly, the lever member 410 may rotate around a hinge connection portion of the lever member 410 of the capsule housing 200.

A hinge connection protrusion for the lever member 410 may be provided in an upper portion of the capsule housing 200 as in the exemplary embodiment illustrated in FIGS. 1 and 2, and a hinge connection hole allowing the hinge connection protrusion for the lever member 410 of the capsule housing 200 to be inserted thereinto may be provided on the lever member 410, whereby the lever member 410 may be hingedly coupled to the upper portion of the capsule housing 200.

However, the configuration in which the lever member 410 is hingedly coupled to the upper portion of the capsule housing 200 is not limited to the illustrated exemplary embodiment and any known configuration may be employed as long as the lever member 410 is hingedly coupled to the capsule housing 200.

As in the exemplary embodiment illustrated in FIGS. 1, 5, and 6, one side of the rotary link member 420 may be hingedly coupled to a lower portion of the capsule housing 200. Accordingly, as illustrated in FIGS. 5 and 6, the rotary link member 420 may rotate around one side.

As in the exemplary embodiment illustrated in FIGS. 1, 5, and 6, a hinge connection protrusion may be formed on one side of the rotary link member 420 and a hinge connection hole allowing the hinge connection protrusion of the rotary link member 420 to be inserted thereinto may be formed in a lower portion of the capsule housing 200, whereby one side of the rotary link member 420 may be hingedly coupled to the lower portion of the capsule housing 200.

However, the configuration in which one side of the rotary link member 420 is hingedly coupled to the lower portion of the capsule housing 200 is not limited thereto and any known configuration may be employed as long as the one side of the rotary link member 420 is hingedly coupled to the lower portion of the capsule housing 200.

One side of the first connection link member 430 may be hingedly coupled to the housing cover 300 as in the exemplary embodiment illustrated in FIGS. 1, 5, and 6. Also, the other side of the first connection link member 430 may be hingedly coupled to the other side of the rotary link member 420. Accordingly, as illustrated in FIGS. 5 and 6, the first connection link member 430 may be moved according to rotation of the rotary link member 420 to rotate the housing cover 300.

As in the exemplary embodiment illustrated in FIGS. 1, 5, and 6, a hinge connection protrusion may be provided in the housing cover 300 and a hinge connection hole allowing the hinge connection protrusion of the housing cover 300 to be inserted thereinto may be provided on one side of the first connection link member 430, whereby one side of the first connection link member 430 may be hingedly coupled to the housing cover 300. Also, a hinge connection protrusion may be provided on the other side of the rotary link member 420 and a hinge connection hole allowing the hinge connection protrusion on the other side of the rotary link member 420 to be inserted thereinto may be provided on the other side of the first connection link member 430, whereby the other side of the first connection link member 430 may be hingedly coupled to the other side of the rotary link member 420.

However, the configuration in which one side of the first connection link member 430 is hingedly coupled to the housing cover 300 and the other side of the first connection link member 430 is hingedly coupled to the other side of the rotary link member 420 is not limited to the illustrated exemplary embodiment and any known configuration may be employed as long as one side of the first connection link member 430 is hingedly coupled to the housing cover 300 and the other side of the first connection link member 430 is hingedly coupled to the other side of the rotary link member 420

Meanwhile, as in the exemplary embodiment illustrated in FIGS. 1 and 2, the first connection link member 430 may have a recess 431. Such a recess 431 may be caught by a protrusion 230 formed in the capsule housing 200 when the housing cover 300 closes the upper portion of the receiving portion 210 as illustrated in FIG. 5. Accordingly, when the housing cover 300 closes the upper portion of the receiving portion 210, the housing cover 300 may not be lifted up without using the lever member 410 as described hereinafter.

One side of the second connection link member 440 may be hingedly coupled to the lever member 410 as in the exemplary embodiment illustrated in FIGS. 1, 5, and 6. Also, the other side of the second connection link member 440 may be hingedly coupled to the other side of the rotary link member 420. Accordingly, as illustrated in FIGS. 5 and 6, the second connection link member 440 may be moved according to an operation of the lever member 410 to rotate the rotary link member 420.

As in the exemplary embodiment illustrated in FIGS. 1, 5, and 6, a hinge connection protrusion may be formed in the lever member 410 and a hinge connection hole allowing the hinge connection protrusion of the lever member 410 to be inserted thereinto may be formed on one side of the second connection link member 440, whereby one side of the second connection link member 440 may be hingedly coupled to the lever member 410. Also, a hinge connection hole allowing the hinge connection protrusion provided on the other side of the rotary link member 420 to be inserted thereinto may be formed on the other side of the second connection link member 440, whereby the other side of the second connection link member 440 may be hingedly coupled to the other side of the rotary link member 420.

However, the configuration in which one side of the second connection link member 440 is hingedly coupled to the lever member 410 and the other side thereof is hingedly coupled to the other side of the rotary link member 420 is not limited to the illustrated exemplary embodiment and any known configuration may be employed as long as one side of the second connection link member 440 is hingedly coupled to the lever member 410 and the other side thereof is hingedly coupled to the other side of the rotary link member 420.

As in the exemplary embodiment illustrated in FIGS. 1, 5, and 6, the rotary link member 420 may be shorter than the first connection link member 430 and the second connection link member 440. Accordingly, as illustrated in FIGS. 5 and 6, the first connection link member 430 is moved according to an operation of the lever member 410, the rotary link member 420 rotates, and the second connection link member 440 moves to rotate the housing cover 300. Accordingly, the housing cover 300 may open and close the upper portion of the receiving portion 210 of the capsule housing 200.

Meanwhile, as illustrated in FIG. 5, when the housing cover 300 closes the upper portion of the receiving portion 210, a first central virtual line L1 extending from one side of the rotary link member 420 to the other side thereof may be positioned between a second central virtual line L2 extending from one side of the first connection link member 430 to the other side thereof and a third central virtual line L3 extending from one side of the second connection link member 440 to the other side thereof.

Thus, when the lever member 410 is lifted, a rotation direction of the rotary link member 420 according to movement of the second connection link member 440 and a rotation direction of the rotary link member 420 according to movement of the first connection link member 430 based on an amount of force exerted in lifting the housing cover 300 due to high pressure exerted on the receiving portion 210 of the capsule housing 200 may be different.

Also, the third central virtual line L3 may be closer to the hinge connection portion of the lever member 410 than the second central virtual line L2.

Thus, as illustrated in FIG. 5, when the upper portion of the receiving portion 210 of the capsule housing 200 is closed by the housing cover 300, when the lever member 410 is lifted, the second connection link member 440 moves toward the hinge connection portion of the lever member 410, and thus, the rotary link member 420 may rotate in a clockwise direction when viewed from the drawing. Thus, the housing cover 300 may be opened by the first connection link member 430.

Also, when the upper portion of the receiving portion 210 of the capsule housing 200 is closed by the housing cover 300 as illustrated in FIG. 5, when high pressure exerts on the receiving portion 210 of the capsule housing 200, force acts in a direction in which the housing cover 300 is lifted. Accordingly, force may acts on the first connection link member 430 in a direction in which the first connection link member 430 moves away from the hinge connection portion of the lever member 410. Also, force may act on the rotary link member 420 in a direction in which the rotary link member 420 rotates in a counterclockwise direction when viewed from the drawing. Thus, the housing cover 300 may further close the upper portion of the receiving portion 210 of the capsule housing 200 by the first connection link member 430.

When the coffee capsule mounting and removal structure according to an exemplary embodiment of the present disclosure described above is used, the upper portion of the receiving portion formed in the capsule housing may be opened and closed by the housing cover such that a coffee capsule is received therein using a lever member and a plurality of link members. Also, a user may easily mount a coffee capsule into the receiving portion of the capsule housing or remove a coffee capsule therefrom, directly. In addition, since a configuration for mounting and removing a coffee capsule is not provided in the receiving portion, the receiving portion may be properly sealed. Moreover, since liquid coffee, or the like, does not remain in the receiving portion, the receiving portion may not be contaminated and a hygienic condition may be enhanced.

The configuration of the coffee capsule mounting and removal structure according to the exemplary embodiments described above is not limited in application thereof, but the entirety or a portion of the embodiments may be selectively combined to be configured into various modifications.

## Claims

1. A coffee capsule mounting and removal structure comprising:
a capsule housing 200 including a receiving portion 210 allowing a coffee capsule CA with coffee grounds contained therein in a sealed manner to be received therein, and configured to allow liquid coffee generated in the coffee capsule CA to be discharged to the outside;
a housing cover 300 hingedly coupled to the capsule housing 200 and covering an open upper portion of the receiving portion 210; and
a driving unit 400 including a lever member 410 and a plurality of link members 420, 430, and 440, configured to allow the housing cover 300 to be rotated by the action of the link members 420, 430, and 440 according to an operation of the lever member 410, so as to open and close the upper portion of the receiving portion 210,
wherein the driving unit 400 is configured such that the housing cover 300 is not opened even in the case that high pressure is exerted on the receiving portion 210 in a state in which the upper portion of the receiving portion 210 is closed by the housing cover 300, **characterized in that**
the driving unit 400 comprises a lever member 410 hingedly coupled to an upper portion of the capsule housing 200, a rotary link member 420 having one side hingedly coupled to a lower portion of the capsule housing 200, a first connection link member 430 having one side hingedly coupled to the housing cover 300 and the other side hingedly coupled to the other side of the rotary link member 420, and a second connection link member 440 having one side hingedly coupled to the lever member 410 and the other side hingedly coupled to the other side of the rotary link member 420.

2. The coffee capsule mounting and removal structure of claim 1, wherein the rotary link member 420 is shorter than the first and second connection link members 430 and 440.

3. The coffee capsule mounting and removal structure of claim 2, wherein a first central virtual line L1 extending from one side of the rotary link member 420 to the other side thereof is positioned between a second central virtual line L2 extending from one side of the first connection link member 430 to the other side thereof and a third central virtual line L3 extending from one side of the second connection link member 440 to the other side thereof.

4. The coffee capsule mounting and removal structure of claim 3, wherein the third central virtual line L3 may be positioned to be closer to a hinge connection portion of the lever member 410 than the second central virtual line L2.

5. The coffee capsule mounting and removal structure of claim 1, wherein a recess 431 is provided in the first connection link member 430 such that the recess 431 is caught by a protrusion 230 provided in the capsule housing 200 when the housing cover 300 closes the upper portion of the receiving portion 210.

6. The coffee capsule mounting and removal structure of claim 1, wherein a hot water supply member 310 is provided in the housing cover 300 to punch an upper portion of the coffee capsule CA received in the receiving portion 210 and supply hot water when the upper portion of the receiving portion 210 is closed.

7. The coffee capsule mounting and removal structure of claim 6, wherein a first sealing member 320 is provided in the housing cover 300 to perform sealing between the capsule housing 200 and housing cover 300 when the upper portion of the receiving portion 210 is closed.

8. The coffee capsule mounting and removal structure of claim 1, wherein a coffee outlet 220 connected to the receiving portion 210 is provided in the capsule housing 200, and a coffee supply member 221 is provided in the receiving portion 210, punches a lower portion of the coffee capsule CA received in the receiving unit 210 to allow liquid coffee generated in the coffee capsule CA to flow to the coffee outlet 220, and is connected to the coffee outlet 220.

9. The coffee capsule mounting and removal structure of claim 8, wherein one or more grip recesses 211 are formed on the circumference of the receiving portion 210 of the capsule housing 200 to allow the coffee capsule CA to be easily removed from the receiving portion 210.

10. The coffee capsule mounting and removal structure of claim 9, wherein a second sealing member 212 is provided on the circumference of the receiving portion 210 of the capsule housing 200.

11. The coffee capsule mounting and removal structure of claim 10, wherein a pressing protrusion 330 pressing the second sealing member 212 is provided in the housing cover 300 in a position corresponding to the second sealing member 212.

## Patentansprüche

1. Aufbau zum Anbringen und Entnehmen einer Kaffeekapsel, wobei der Aufbau Folgendes umfasst:
ein Kapselgehäuse 200, das einen Aufnahmeabschnitt 210 aufweist, damit eine Kaffeekapsel CA, in der Kaffeemehl dicht verschlossen enthalten ist, darin aufgenommen werden kann, und das so konfiguriert ist, dass flüssiger Kaffee, der in der Kaffeekapsel CA erzeugt wird, zu der Außenseite abgeführt werden kann;
eine Gehäuseabdeckung 300, die mit dem Kapselgehäuse 200 über ein Gelenk gekoppelt ist und einen offenen oberen Abschnitt des Aufnahmeabschnitts 210 bedeckt; und
eine Antriebseinheit 400, die ein Hebelelement 410 und mehrere Gelenkelemente 420, 430 und 440 umfasst, die so konfiguriert sind, dass die Gehäuseabdeckung 300 durch die Wirkung der Gelenkelemente 420, 430 und 440 in Übereinstimmung mit einer Betätigung des Hebelelements 410 gedreht werden kann, um den oberen Abschnitt des Aufnahmeabschnitts 210 zu öffnen und zu schließen,
wobei die Antriebseinheit 400 so konfiguriert ist, dass die Gehäuseabdeckung 300 auch in dem Fall, in dem auf den Aufnahmeabschnitt 210 in einem Zustand, in dem der obere Abschnitt des Aufnahmeabschnitts 210 durch die Gehäuseabdeckung 300 geschlossen ist, ein hoher Druck ausgeübt wird, nicht geöffnet ist,
**dadurch gekennzeichnet, dass**
die Antriebseinheit 400 Folgendes umfasst: ein Hebelelement 410, das mit einem oberen Abschnitt des Kapselgehäuses 200 über ein Gelenk gekoppelt ist, ein Drehgelenkelement 420, wovon eine Seite mit einem unteren Abschnitt des Kapselgehäuses 200 über ein Gelenk gekoppelt ist, ein erstes Verbindungsgelenkelement 430, wovon eine Seite mit der Gehäuseabdeckung 300 über ein Gelenk gekoppelt ist und die andere Seite mit der anderen Seite des Drehgelenkelements 420 über ein Gelenk gekoppelt ist, und ein zweites Verbindungsgelenkelement 440, wovon eine Seite mit dem Hebelelement 410 über ein Gelenk gekoppelt ist und die andere Seite mit der anderen Seite des Drehgelenkelements 420 über ein Gelenk gekoppelt ist.

2. Aufbau zum Anbringen und Entnehmen einer Kaffeekapsel nach Anspruch 1, wobei das Drehgelenkelement 420 kürzer als das erste und das zweite Verbindungsgelenkelement 430 und 440 ist.

3. Aufbau zum Anbringen und Entnehmen einer Kaffeekapsel nach Anspruch 2, wobei eine erste virtuelle Mittellinie L1, die von einer Seite des Drehgelenkelements 420 zu der anderen Seite verläuft, zwischen einer zweiten virtuellen Mittellinie L2, die von einer Seite des ersten Verbindungsgelenkelementes 430 zu der anderen Seite verläuft, und einer dritten virtuellen Mittellinie L3, die von einer Seite des zweiten Verbindungsgelenkelements 440 zu der anderen Seite verläuft, positioniert ist.

4. Aufbau zum Anbringen und Entnehmen einer Kaffeekapsel nach Anspruch 3, wobei die dritte virtuelle Mittellinie L3 so positioniert sein kann, dass sie näher an einem Gelenkverbindungsabschnitt des Hebelelements 410 als die zweite virtuelle Mittellinie L2 liegt.

5. Aufbau zum Anbringen und Entnehmen einer Kaffeekapsel nach Anspruch 1, wobei eine Vertiefung 431 so in dem ersten Verbindungsgelenkelement 430 vorgesehen ist, dass die Vertiefung 431 durch einen Vorsprung 230, der in dem Kapselgehäuse 200 vorgesehen ist, erfasst wird, wenn die Gehäuseabdeckung 300 den oberen Abschnitt des Aufnahmeabschnitts 210 schließt.

6. Aufbau zum Anbringen und Entnehmen einer Kaffeekapsel nach Anspruch 1, wobei ein Heißwasser-Zufuhrelement 310 in der Gehäuseabdeckung 300 so vorgesehen ist, dass es einen oberen Abschnitt der Kaffeekapsel CA, die in dem Aufnahmeabschnitt 210 aufgenommen ist, durchstößt, und heißes Wasser zuführt, wenn der obere Abschnitt des Aufnahmeabschnitts 210 geschlossen ist.

7. Aufbau zum Anbringen und Entnehmen einer Kaffeekapsel nach Anspruch 6, wobei ein erstes Dichtungselement 320 in der Gehäuseabdeckung 300 vorgesehen ist, um zwischen dem Kapselgehäuse 200 und der Gehäuseabdeckung 300 eine Dichtung zu bilden, wenn der obere Abschnitt des Aufnahmeabschnitts 210 geschlossen ist.

8. Aufbau zum Anbringen und Entnehmen einer Kaffeekapsel nach Anspruch 1, wobei ein Kaffeeauslass 220, der mit dem Aufnahmeabschnitt 210 verbunden ist, in dem Kapselgehäuse 200 vorgesehen ist und
ein Kaffeezufuhrelement 221 in dem Aufnahmeabschnitt 210 vorgesehen ist, einen unteren Abschnitt der Kaffeekapsel CA, die in der Aufnahmeeinheit 210 aufgenommen ist, durchstößt, damit flüssiger Kaffee, der in der Kaffeekapsel CA erzeugt worden ist, zu dem Kaffeeauslass 220 fließen kann, und mit dem Kaffeeauslass 220 verbunden ist.

9. Aufbau zum Anbringen und Entnehmen einer Kaffeekapsel nach Anspruch 8, wobei eine oder mehrere Griffaussparungen 211 an dem Umfang des Aufnahmeabschnitts 210 des Kapselgehäuses 200 ausgebildet sind, damit die Kaffeekapsel CA leicht aus dem Aufnahmeabschnitt 210 entfernt werden kann.

10. Aufbau zum Anbringen und Entnehmen einer Kaffeekapsel nach Anspruch 9, wobei ein zweites Dichtungselement 212 an dem Umfang des Aufnahmeabschnitts 210 des Kapselgehäuses 200 vorgesehen ist.

11. Aufbau zum Anbringen und Entnehmen einer Kaffeekapsel nach Anspruch 10, wobei ein Druckvorsprung 330, der das zweite Dichtungselement 212 drückt, in der Gehäuseabdeckung 300 in einer Position vorgesehen ist, die mit dem zweiten Dichtungselement 212 übereinstimmt.

## Revendications

1. Structure de support et de retrait de capsule de café comprenant :
un logement de capsule (200) comprenant une partie de réception (210) permettant à une capsule de café (CA) avec des grains de café contenus à l'intérieur de cette dernière, d'être reçue de manière étanche à l'intérieur de ce dernier, et configuré pour permettre au café liquide généré dans la capsule de café (CA) d'être évacué à l'extérieur ;
un couvercle de logement (300) couplé, de manière articulée, au logement de capsule (200) et recouvrant une partie supérieure ouverte de la partie de réception (210) ; et
une unité d'entraînement (400) comprenant un élément de levier (410) et une pluralité d'éléments de liaison (420, 430 et 440), configurée pour permettre au couvercle de logement (300) d'être entraîné en rotation par l'action des éléments de liaison (420, 430 et 440) selon une opération de l'élément de levier (410) afin d'ouvrir et de fermer la partie supérieure de la partie de réception (210),
dans laquelle l'unité d'entraînement (400) est configurée de sorte que le couvercle de logement (300) n'est pas ouvert même dans le cas dans lequel une pression élevée est exercée sur la partie de réception (210) dans un état dans lequel la partie supérieure de la partie de réception (210) est fermée par le couvercle de logement (300), **caractérisée en ce que** :
l'unité d'entraînement (400) comprend un élément de levier (410) couplé, de manière articulée, à une partie supérieure du logement de capsule (200), un élément de liaison rotatif (420) ayant un côté couplé, de manière articulée, à une partie inférieure du logement de capsule (200), un premier élément de liaison de raccordement (430) ayant un côté couplé, de manière articulée, au couvercle de logement (300) et l'autre côté couplé, de manière articulée, à l'autre côté de l'élément de liaison rotatif (420) et un deuxième élément de liaison de raccordement (440) ayant un côté couplé, de manière articulée, à l'élément de levier (410) et l'autre côté couplé, de manière articulée, à l'autre côté de l'élément de liaison rotatif (420).

2. Structure de support et de retrait de capsule de café selon la revendication 1, dans laquelle l'élément de liaison rotatif (420) est plus court que les premier et deuxième éléments de liaison de raccordement (430 et 440).

3. Structure de support et de retrait de capsule de café selon la revendication 2, dans laquelle une première ligne virtuelle centrale (L1) s'étendant à partir d'un côté de l'élément de liaison rotatif (420) jusqu'à son autre côté, est positionnée entre une deuxième ligne virtuelle centrale (L2) s'étendant à partir d'un côté du premier élément de liaison de raccordement (430) jusqu'à son autre côté et une troisième ligne virtuelle centrale (L3) s'étendant à partir d'un côté du deuxième élément de liaison de raccordement (440) jusqu'à son autre côté.

4. Structure de support et de retrait de capsule de café selon la revendication 3, dans laquelle la troisième ligne virtuelle centrale (L3) peut être positionnée pour être plus proche d'une partie de raccordement de charnière de l'élément de levier (410) que la deuxième ligne virtuelle centrale (L2).

5. Structure de support et de retrait de capsule de café selon la revendication 1, dans laquelle un évidement (431) est prévu dans le premier élément de liaison de raccordement (430) de sorte que l'évidement (431) est attrapé par une saillie (230) prévue dans le logement de capsule (200) lorsque le couvercle de logement (300) ferme la partie supérieure de la partie de réception (210).

6. Structure de support et de retrait de capsule de café selon la revendication 1, dans laquelle un élément d'alimentation en eau chaude (310) est prévu dans le couvercle de logement (300) pour perforer une partie supérieure de la capsule de café (CA) reçue dans la partie de réception (210) et fournir l'eau chaude lorsque la partie supérieure de la partie de réception (210) est fermée.

7. Structure de support et de retrait de capsule de café selon la revendication 6, dans laquelle un premier élément d'étanchéité (320) est prévu dans le couvercle de logement (300) afin de réaliser l'étanchéité entre le logement de capsule (200) et le couvercle de logement (300) lorsque la partie supérieure de la partie de réception (210) est fermée.

8. Structure de support et de retrait de capsule de café selon la revendication 1, dans laquelle une sortie de café (220) raccordée à la partie de réception (210) est prévue dans le logement de capsule (200), et
un élément d'alimentation en café (221) est prévu dans la partie de réception (210), perfore une partie inférieure de la capsule de café (CA) reçue dans l'unité de réception (210) pour permettre au café liquide généré dans la capsule de café (CA) de s'écouler vers la sortie de café (220), et est raccordé à la sortie de café (220).

9. Structure de support et de retrait de capsule de café selon la revendication 8, dans laquelle un ou plusieurs évidements de préhension (211) sont formés sur la circonférence de la partie de réception (210) du logement de capsule (200) pour permettre à la capsule de café (CA) d'être facilement retirée de la partie de réception (210).

10. Structure de support et de retrait de capsule de café selon la revendication 9, dans laquelle un deuxième élément d'étanchéité (212) est prévu sur la circonférence de la partie de réception (210) du logement de capsule (200).

11. Structure de support et de retrait de capsule de café selon la revendication 10, dans laquelle une saillie de pression (330) exerçant une pression sur le deuxième élément d'étanchéité (212) est prévue dans le couvercle de logement (300) dans une position correspondant au deuxième élément d'étanchéité (212).
